# EUROPEAN PATENT APPLICATION

(11) **EP 2 871 490 A1**
(43) Date of publication of application: **13.05.2015**
(21) Application number: 14191271.7
(22) Date of filing: 31.10.2014
(51) Int. Cl.: G01S 13/04, G01S 7/40, G01S 7/02

(54) **Vehicle detecting sensor assembly**

(30) Priority: 12.11.2013 JP 2013233893
(71) Applicant: Optex Co., Ltd., Shiga 520-0101 (JP)
(72) Inventor: Shiraishi, Masanao, Otsu-shi, Shiga 520-0101 (JP); Takada, Yasuhiro, Otsu-shi, Shiga 520-0101 (JP); Kageyama, Naoki, Otsu-shi, Shiga 520-0101 (JP); Mihara, Mitsugu, Otsu-shi, Shiga 520-0101 (JP)
(74) Representative: Calderbank, Thomas Roger

(57) **Abstract**

A vehicle detecting sensor assembly (1) includes a microwave module (4) and a radome (5) for detecting the presence or absence of a parked vehicle, parked in a predetermined parking area (3), according an FMCW scheme. A shielding member (10) is provided on each of left and right sides, each of upper and lower sides or each of upper and lower and left and right sides of the module so as to protrude in a direction, conforming to the direction of transmission of a microwave, so that a detection range angle by the microwave can be varied in dependence on the position of the sensor and the size of the parking area, and a so disposed that the distance of separation between the module and the radome, through which the microwave passes, may lie in the vicinity of n times the half-wave length of the microwave.

## Description

The present invention relates to a vehicle detecting sensor assembly for detecting the presence or absence of a vehicle in a parking area or lot by means of the FMCW scheme utilizing microwaves.

In general, as the vehicle detecting sensor assembly for detecting the presence or absence of a vehicle parked in the parking lot, an ultrasonic sensor assembly has been suggested in, for example, the patent document 1, listed below, in which an ultrasonic sensor is fitted to a ceiling of the parking lot to emit ultrasonic waves towards a floor surface of the parking lot so that based on waves reflected from the vehicle parked therebelow or from the floor surface the parked vehicle can be detected, and another system makes use of a loop coil system in which, as suggested in, for example, the patent document 2 listed below, a loop coil is embedded in the floor surface of the parking lot so that the vehicle parked thereabove can be detected.

In the case of the loop coil sensor assembly, an embedment work to embed the loop coil is generally necessitated and such embedment work is so complicated as to result in the increase of the installation cost. On the other hand, the ultrasonic sensor assembly, in which the ultrasonic sensor is installed in the ceiling, is incapable of being used in the outdoor (open-air) parking place. Where the ultrasonic sensor is installed on, for example, an outdoor pole or any other existing wall, the installation may be facilitated as compared with the case of the floor surface embedment, but the installation on the outdoor pole or the existing wall may lead to an erroneous operation as a result of the influence brought about by a fall of water such as rainfall, sleet, and others on the ultrasonic sensor. Nevertheless, it is unrealistic to provide the outdoor parking place with a roof only for the purpose of avoiding the influence which may be brought about by the rainfall.

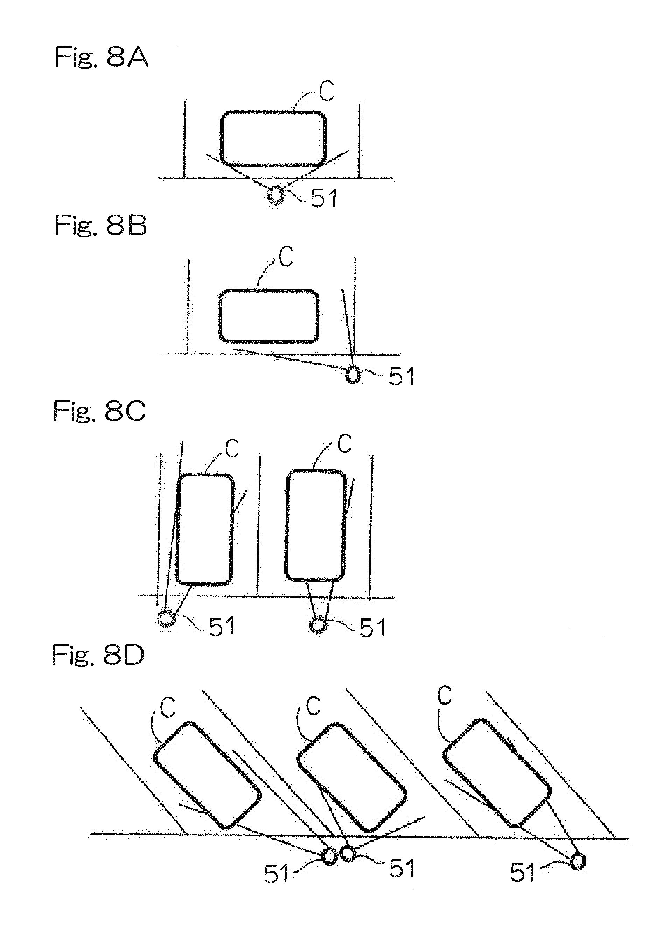

In recent years, an ultrasonic sensor, in which an ultrasonic module itself is configured to have a drip proof, has become available in the market, but such ultrasonic sensor is used on the vehicle as an element forming a part of the vehicle mounted anti-collision system. It has, however, been found that the use of the ultrasonic sensor of the type discussed above in detecting the parked vehicle, the installation of the ultrasonic sensor 51 at a position on one side of the parked vehicle C and intermediate of the length of the latter as shown in Fig. 8A poses no problem.

However, since the detecting angle range of the ultrasonic wave is large, there is the possibility that an erroneous detection of the vehicle C parked in the neighboring parking lot in the case of Fig. 8B in which the sensor 51 is positioned forwardly or rearwardly of a side surface of the parked vehicle C, Fig. 8C in which the sensor 51 is positioned forwardly or rearwardly of the parked vehicle C, or Fig. 8D in which the sensor 51 is positioned forwardly or rearwardly of the vehicle C then parked slantwise. In order to avoid those possibilities, it becomes necessary to fit an outwardly protruding horn so as to narrow the detecting area.

### [Prior Art Literature]

Patent Document 1: JP Laid-open Patent Publication No. 2010-061607
Patent Document 2: JP Laid-open Patent Publication No. H09-026481

In the system in which the horn is used to narrow the detecting area, there is the possibility that the outwardly protruding horn may be impaired or tampered. On the other hand, without using the ultrasonic sensor assembly, it may be contemplated to use an AIR (Active Infrared Ray) system utilizing an infrared beam projector and an infrared beam receiver for detecting an object in the event of interruption of the infrared rays being transmitted from the infrared beam projector towards the infrared beam receiver. But the AIR system is incapable of being used outdoor and, at the same time, since it is a relative detection system, it is liable to an erroneous detection because it involves a inverting phenomenon (a phenomenon in which if the object is held in a constant state for a prolonged time, it is erroneously stored as a background, resulting in a non-detection, but if the object moves, it may inversely operate as detection).

On the other hand, it may be contemplated to use a microwave (MW) sensor to render it to be of the FMCW scheme in which the distance is calculated. Since it is the determination based on the distance and is, therefore, an absolute detection system, no inverting phenomenon occurs, but it may be adversely affected by rainfall.

In view of the foregoing, the present invention has been devised to reduce or substantially eliminate the problems and inconveniences inherent in the prior art and is intended to provide a vehicle detecting sensor assembly in which microwaves are used to flexibly accommodate various conditions, under which the sensor is installed in the parking area, and in which the influence on the sensor assembly brought about by the fall of water is minimized as minimal as possible.

A vehicle detecting sensor assembly of the present invention includes a microwave module to transmit and receive microwave, and a radome to cover a front face of a transmitting direction in the microwave module, and is operable to detect the presence or absence of a parked vehicle, parked in a predetermined parking area, according an FMCW scheme for calculating the distance to a measurement object on the basis of a beat frequency signal between a transmitted signal of a microwave and a received signal reflected upon the measurement object. A shielding member is provided on each of left and right sides, each of upper and lower sides or each of upper and lower and left and right sides of the microwave module so as to protrude in a direction conforming to the direction of transmission of a microwave, so that a detection range angle by the microwave can be varied in dependence on the position of the sensor and the size of the parking area, and the microwave module is so disposed that the distance of separation between the microwave module and the radome, through which the microwave passes, may lie in the vicinity of n times the half-wave length of the microwave. The term "distance of separation" is a center-distance between a center of transmission-reception surface of the microwave module and a center of microwave transmitting area on the radome. The term "vicinity" includes the half-wave length and a deviation within ± 15 % of the half-wave length, preferably within ± 10 % thereof and more preferably within ± 5 % thereof.

According to the present invention, by selecting the shielding member in dependence on the position of installation of the sensor relative to the parking area, due to the fact that the detection range angle of the microwave can be limited and that an object, which is shorter than the arbitrary distance from the sensor assembly within the parking area can be determined as the parked vehicle, the erroneous detection resulting from the vehicle parked outside the parking area can be easily avoided. Also, since the distance of separation between the microwave module thereof and the radome, through which the microwave passes, is so disposed as to be in the vicinity of the n times the half-wave length of the microwave, it would not be adversely affected by the drops of water sticking to the surface of the radome and, hence, the influence on the sensor assembly brought about by the fall of water can be reduced as minimal as possible.

In the practice of the present invention, the sensor assembly is preferably fitted to a support body which is disposed at a position in the vicinity of the outside of the area or above the area. Accordingly, since the sensor assembly can be fixed to the support body, such as, for example, a pole disposed outside or upwardly of the parking area, by the use of a U-shaped metal piece, it becomes easy to orient the direction of fitting of the sensor assembly towards the parking area and, therefore, installation can be facilitated.

In a preferred embodiment of the present invention, a water fall shielding body for covering the radome is preferably employed to avoid sticking of drops of water, resulting from a fall of water (water fall), to a surface of the radome. In such case, because of the use of the water fall shielding member, sticking of the drops of water onto the radome surface is minimized and, hence, the influence on the sensor assembly brought about by the fall of water such as, for example, rainfall can be minimized.

The sensor assembly may be disposed in an outdoor parking space such that it is susceptible to an influence brought about a fall of water. In this case, the necessity of minimizing the influence on the sensor assembly which would be brought about by the fall of water is high. Also, the radome referred to above may be made of a resinous material and has a thickness that is chosen in consideration of the wavelength of the microwave and the dielectric constant of the resinous material so that the microwave passing through the radome may not be adversely affected. The shielding member may protrude in the direction of transmission of a microwave, and may be positioned rearwardly of the radome. In this case, since the shielding member does not protrude outwardly of the radome, the possibility may be minimized that it may be damaged or tampered unlike the conventional horn construction.

In the drawings:

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1A is a schematic top plan view showing the manner of installation of a vehicle detecting sensor assembly according to a preferred embodiment of the present invention;
Fig. 1B is a schematic side view of Fig. 1A;
Fig. 2 is a schematic perspective view showing a vehicle detecting sensor assembly employed in the practice of the preferred embodiment of the present invention;
Fig. 3 is a schematic top plan view showing the vehicle detecting sensor assembly;
Fig. 4 is a block diagram showing a microwave module employed in the vehicle detecting sensor assembly;
Fig. 5 is a characteristic chart showing the relationship between the distance of separation between the microwave module and a radome and the vehicle detecting distance;
Figs. 6A and 6B are characteristic charts showing the vehicle detecting distances resulting from the respective distance of separation between the microwave module and the radome;
Fig. 7A is a schematic top plan view showing a different manner of installation of the vehicle detecting sensor assembly;
Fig. 7B is a schematic side view of Fig. 7A; and
Figs. 8A to 8D are schematic top plan views showing respective manners of installation of the sensor.

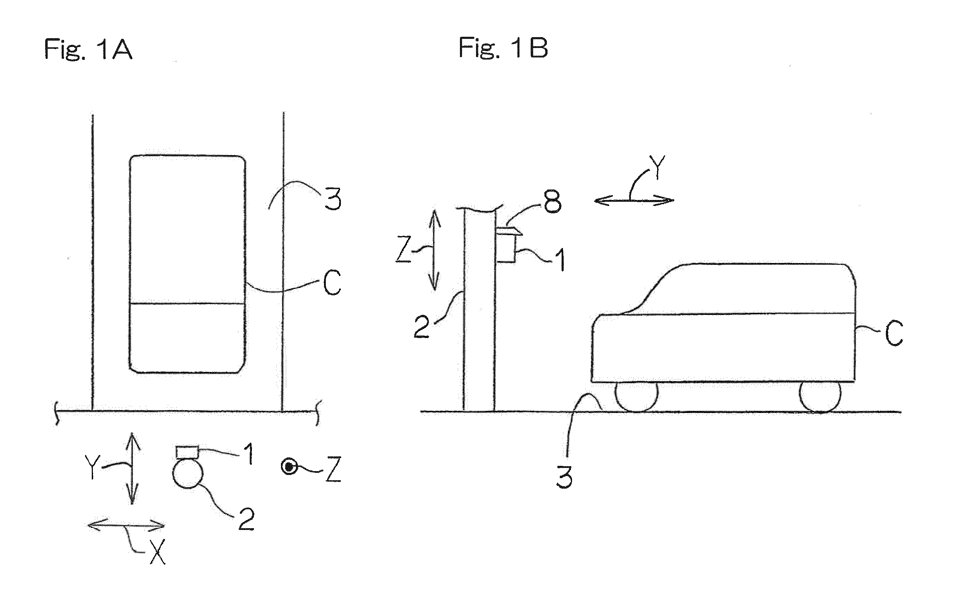

Hereinafter, a preferred embodiment of the present invention will be described in detail with particular reference to the accompanying drawings. In particular, Fig. 1A illustrates a schematic top plan view showing the manner of installation of a vehicle detecting sensor assembly 1 in accordance with the preferred embodiment of the resent invention and Fig. 1B illustrates a schematic side view of Fig. 1A. The sensor assembly 1 is of a type that is used in, for example, an outdoor parking place and is, as shown in Fig. 1A, fitted to a support body 2 such as, for example, a wall or a pole that is installed upright so as to extend in a vertical direction Z in the vicinity of an outer side of a plurality of parking areas or lots 3, where corresponding vehicles C can park. As shown in Fig. 1B, the sensor assembly 1 is disposed in the support body 2 at a heightwise position approximating to the height of the parked vehicle C so that the parked vehicle C can be detected from a longitudinal direction Y. As compared with the standard floor surface embedment, it becomes easy to install the sensor assembly 1.

The sensor assembly 1 is disposed at a position in the longitudinal direction Y or a lateral direction X, or at an upper position, which is the perimeter of the parked vehicle C, excluding a position below the parked vehicle C in the parking lot 3, but including a position in slightly inclined diagonally upwardly or diagonally downwardly. That is, a sensor position can be changed in a direction not only along the longitudinal direction Y or a lateral direction X but also along the vertical direction Z shown in Fig. 1B.

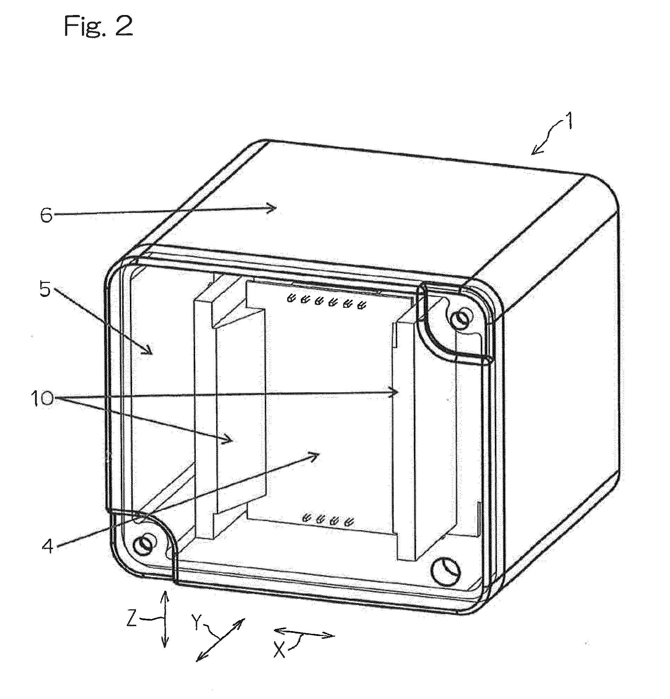

Fig. 2 illustrates a perspective view showing the vehicle detecting sensor assembly 1. The vehicle detecting sensor assembly 1 shown therein includes a microwave module 4 to transmit and receive microwave, and a radome 5 to cover a front face of a transmitting direction in the microwave module 4 and a main body casing 6. The radome 5 is made of, for example, a resinous material. The radome 5 is a flat plate, but may be a curved plate. This radome 5 has a thickness determined in consideration of the wavelength of the microwave and the dielectric constant of the resinous material such that it will not affect the microwave that will pass therethrough. A shielding member 10 is suitably provided in order to limit the detecting range angle attributable to the microwave as will be detailed later.

The sensor assembly 1 is of a type capable of detecting the presence or absence of the vehicle C, which is parked in a predetermined parking lot 3, from the calculated distance to the parked vehicle C in that predetermined parking lot 3 according to the FMCW schema by which the distance to an measurement object is calculated on the basis of a beat frequency signal between a transmitted signal of the microwave and a received signal reflected upon the measurement object.

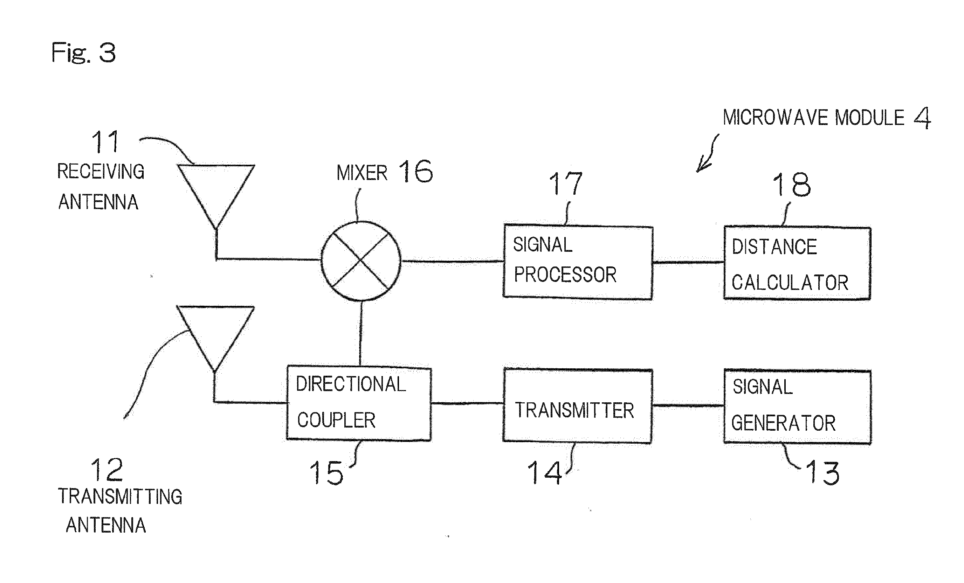

As shown in Fig. 3, the microwave module 4 is of any known construction. Namely, the microwave module 4 includes a receiving antenna 11, a transmitting antenna 12, a signal generator 13 for generating an FMCW signal, a transmitter 14 for outputting the FMCW signal to the transmitting antenna 12, a directional coupler 15 for branching off a portion of an output signal of the transmitter 14, a mixer 16 for extracting the beat frequency signal between a signal from the directional coupler 15 and a signal fed through the receiving antenna 11, a signal processing unit 17 for analyzing the beat frequency signal to detect the parked vehicle C, and a distance calculating unit 18 for calculating the distance to the parked vehicle C by means of the analysis done by the signal processing unit 17. Based on the detection distance so calculated, the presence or absence of the parked vehicle C is detected.

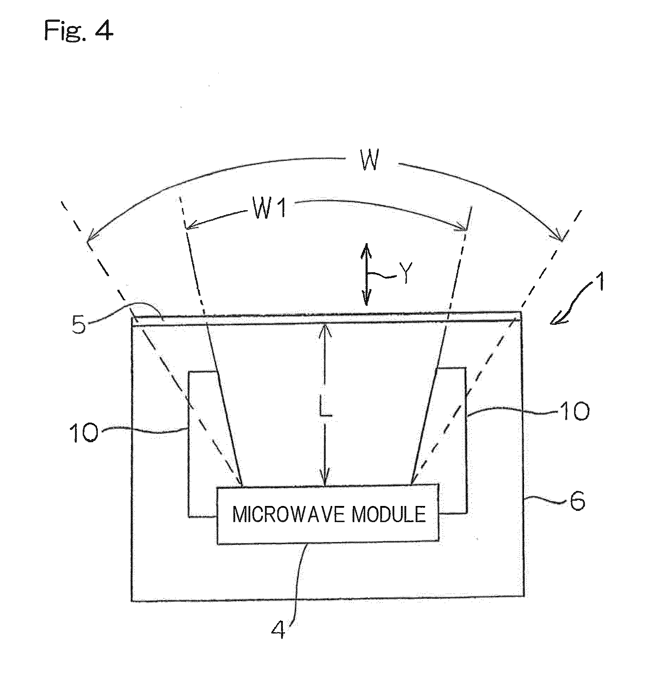

And, so that the sensor assembly 1 may change the detecting range angle by the microwave in dependence on the position of the sensor assembly 1 and the size of the parking lot 3, the sensor assembly 1 is provided with the shielding member 10, which protrudes in a direction conforming to the direction of transmission of the microwaves, on each side of at least a widthwise direction X of the microwave module 4 within the main body casing 6. By this shielding member 10, as shown in Fig. 4, the original detection range angle W of the sensor assembly 1 is restricted to a detection range W1 that is narrower than the original detection range angle W.

In this case, as shown in Figs. 8A to 8D, since in dependence on the size of the parking lot 3 and the position of the sensor assembly 1, the detection range angle by the microwave is restricted by the shielding members 10, an erroneous detection can be easily avoided in consistence therewith regardless of the environment in which the sensor is installed.

In this instance, as shown in Fig. 4, the microwave module 4 is so disposed within the main body casing 6 that the distance L of separation between the microwave module 4 and the radome 5, through which the microwave passes, may be in the vicinity of n times the half-wave length of the microwave. The distance L of separation is a center-distance between a center of transmission-reception surface (outer surface) 4a of the microwave module 4 and a center of microwave transmitting area on the radome 5. A center line CE of a transmitting area on the microwave module 4 coincides with a center line of a transmitting area (inner surface) on the radome 5. The microwave has a high density in a center region in and around the center line CE compared with a peripheral region. Accordingly, the center region of the microwave has a dominant role in the sense of detection. A length L1 from the center of the transmission-reception surface 4a of the microwave module 4 to a point on the radome 5 offset from the center becomes larger than the length L. Accordingly, the length L1 in the peripheral region deviates from the vicinity of n times of the half-wave length even if the length L in the center region falls in the vicinity of n times of the half-wave length. The transmission-reception surface 4a of the microwave module 4 and the radome 5 in this embodiment are flat surfaces parallel to each other. However, the microwave module 4 and/or the radome 5 may be curved.

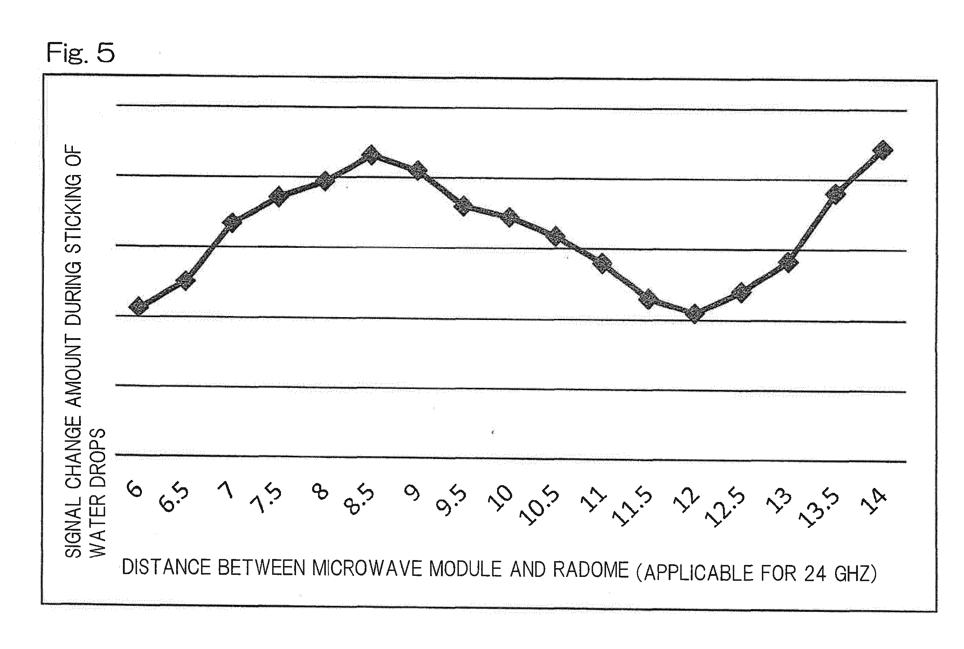

Fig. 5 illustrates the signal change amount, exhibited when drops of water stick to a surface of the radome 5, in the event that the distance L of separation between the microwave module 4 and the radome 5 is changed. The drops of water result from the presence of the fall of water such as, for example, rainfall and/or sleet in the parking lot in the outdoor parking place. Also, it may also occur when the drops of water stick as a result of generation of dense fog or dew formation. As shown in Fig. 5, in the case in which the microwave module 4 of, for example, 24 Ghz band is employed, it will readily be seen that the half-wave length thereof is about 6 mm and a signal change is low since the microwave is in the vicinity of zero cross, when the distance L of separation is in the vicinity of the n times the half-wave length of the microwave. Conversely, it means that when the distance L of separation is in a positional relation that is different from the n times, sticking of the drops of water to the surface of the radome 5 while, for example, no vehicle is then parked in the parking area leads to change of the signal and, therefore, the sensor becomes unstable in state, resulting in the calculation of the wrong distance. Accordingly, with the separation distance L set in the vicinity of the n times the half-wave length of the microwave, it is possible to render it to be insensitive to the influence brought about by the drops of water and, accordingly, the influence on the sensor assembly 1, which would be brought about by the fall of water such as, for example, rainfall, can be reduced as minimal as possible.

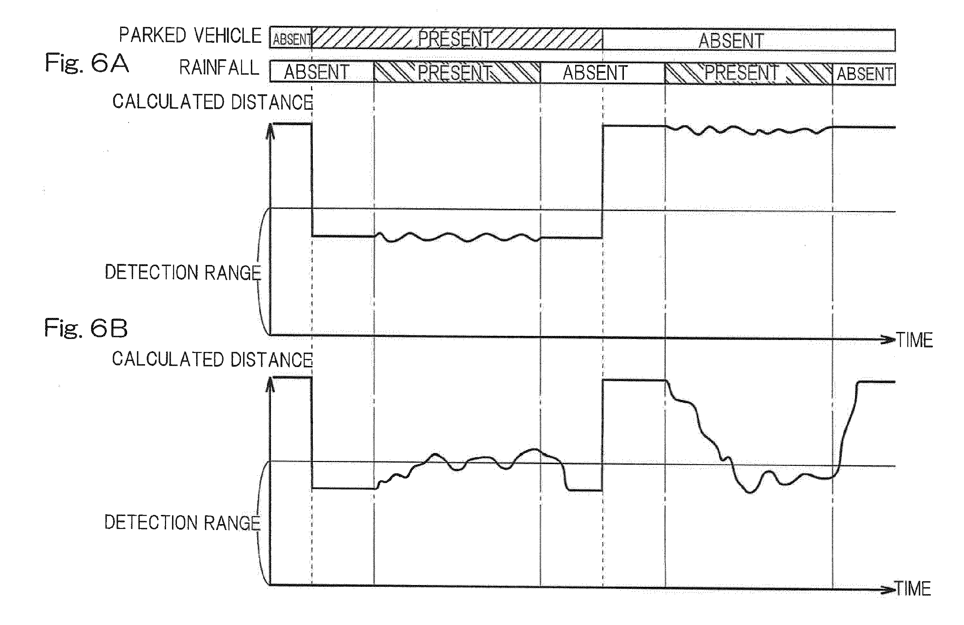

Figs. 6A and 6B illustrate characteristic charts each showing the detection distance of the vehicle C resulting from the separation distance L between the microwave module 4 and the radome 5. By way of example, Fig. 6A applies to the case in which the separation distance L is n times the half-wave length and Fig. 6B applies to the case in which the separation distance L is of a value not corresponding to the n times the half-wave length. In the case of Fig. 6B, when the drops of water stick during the rainfall and subsequent to it, such a problem may occur that, as a result that the detecting distance to the parked vehicle C is inaccurate and unstable under the influence of the water drops on the surface of the radome 5, the calculated distance is determined longer than that in the actual situation and, hence, becomes non-detectable regardless of the presence of the vehicle or that, regardless of the absence of the vehicle, the calculated distance may be determined short and, hence, becomes detectable. Such erroneous operation may be sustained for a while during the condition in which the drops of water remain sticking to the radome surface even after the rainfall ends, but in the case of Fig. 6A, even in the presence of the drops of water on the surface of the radome 5 during the rainfall, the detecting distance to the parked vehicle C has been found accurate and stabilized as compared with the case of Fig. 6B.

As shown in Fig. 1B, in the example as shown, a water fall shielding body 8 is provided at, for example, an upper position of the main body casing 6 of the sensor assembly 1 fitted to the support body 2. In this case, the radome 5 is covered by the water fall shielding body 8 and, accordingly, sticking of the drops of water to the surface of the radome 5 is minimized and, therefore, the influence on the sensor assembly 1 brought about by the fall of water such as, for example, rainfall can be further minimized.

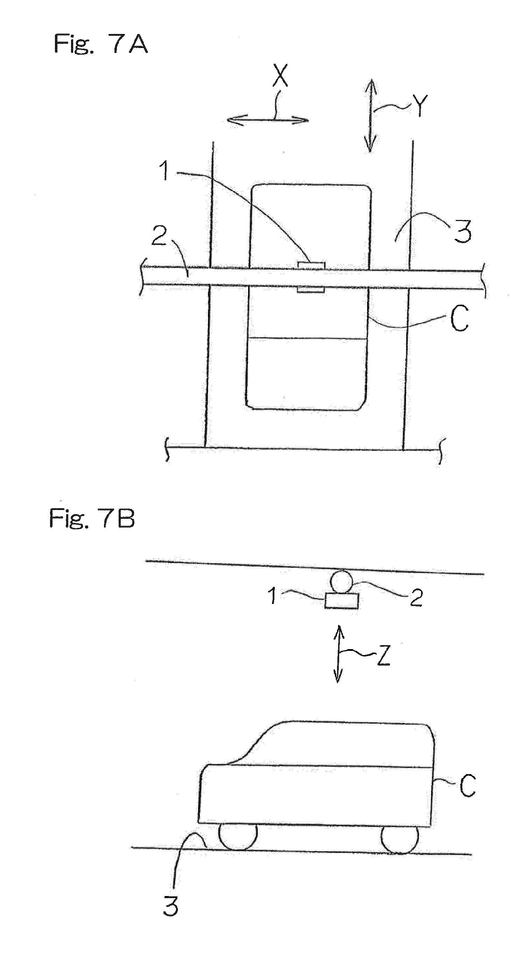

Fig. 7A illustrates a schematic top plan view showing a different manner of installation of the vehicle detecting sensor assembly and Fig. 7B illustrates a schematic side view of Fig. 7A. The sensor assembly 1 is of a type used in, for example, an indoor parking place and is fitted to the support body 2 such as, for example, a pole provided in a ceiling that is present above the parking lot and is at the same time disposed upwardly of the parking lot 3 so that the sensor assembly 1 can detect the parked vehicle C from the vertical direction Z.

Accordingly, because of the capability that an arbitrary distance, which is smaller than the heightwise distance to the sensor installing position can be determined as the parked vehicle C and also because of the capability that an erroneous detection attributable to the vehicle present outside of the parking lot 3 can be avoided by changing the detection range angle through the selection of features of the shielding member 10, the use can be enabled even at a site in a manner similar to the conventional ultrasonic sensor that is installed in the ceiling and, therefore, the installation over a broad range of width can be accomplished with the same sensor.

It is to be noted that the position of the sensor assembly 1 is not necessarily limited to the position in the upward direction (vertical direction Z) of the parking lot 3 as hereinbefore described, but the position somewhat displaced in the X direction or the Y direction, both shown in Fig. 7A is also included.

As hereinbefore described in detail, the present invention is such that due to the fact that the detection range angle of the microwave can be limited by selecting features of the shielding member 10 in accordance with the sensor installing portion in the parking lot 3 and that an object, which is shorter than the arbitrary distance from the sensor assembly 1 within the parking lot 3 can be determined as the parked vehicle C, the erroneous detection resulting from the vehicle parked outside the parking lot 3 can be easily avoided. Also, since the distance of separation between the microwave module 4 thereof and the radome 5, through which the microwave passes, is so disposed as to be in the vicinity of the n times the half-wave length of the microwave, it would not be adversely affected by the drops of water sticking to the surface of the radome 5 and, hence, the influence on the sensor assembly 1 brought about by the fall of water such as, for example, rainfall can be reduced as minimal as possible.

It is to be noted that although in describing the embodiments of the present invention as set forth hereinabove, the present invention has been shown and described as applied to the vehicle detecting sensor assembly for detecting the presence or absence of the parked vehicle, the present invention is not necessarily limited thereto and can be equally applied in detecting a vehicle such as a railroad car then approaching a station platform.

It is also to be noted that although in describing the embodiments of the present invention as set forth hereinabove, the water fall shielding body 8 has been shown and described as provided at the position above the sensor assembly 1, it may be dispensed with if so required.

In addition, although in the foregoing description of the preferred embodiments of the present invention, the use has been shown and made of the shielding member protruding in a direction conforming to the direction of transmission of the microwave, it may be dispensed therewith if so required.

Although the present invention has been fully described in connection with the preferred embodiments thereof with reference to the accompanying drawings which are used only for the purpose of illustration, those skilled in the art will readily conceive numerous changes and modifications within the framework of obviousness upon the reading of the specification herein presented of the present invention. Accordingly, such changes and modifications are, unless they depart from the scope of the present invention as delivered from the claims annexed hereto, as interpreted by the description and drawings to be construed as included therein.

### [Reference Numerals]

1 ···· Vehicle detecting sensor assembly
2 ···· Support body (Pole)
3 ···· Parking area (lot)
4 ···· Microwave module
5 ···· Radome
6 ···· Main body casing
8 ···· Water fall shielding body
10 ···· Shielding member
C ···· Parked vehicle
L ···· Distance of separation
X ···· Lateral direction
Y ···· Longitudinal direction
Z ···· Vertical direction

## Claims

1. A vehicle detecting sensor assembly which comprises a microwave module to transmit and receive microwave, and a radome to cover a front face of a transmitting direction in the microwave module, and is operable to detect the presence or absence of a parked vehicle, parked in a predetermined parking area, according an FMCW scheme for calculating the distance to a measurement object on the basis of a beat frequency signal between a transmitted signal of a microwave and a received signal reflected upon the measurement object, which system comprises:
a shielding member provided on each of left and right sides, each of upper and lower sides or each of upper and lower and left and right sides of the microwave module so as to protrude in a direction conforming to the direction of transmission of a microwave, so that a detection range angle by the microwave can be varied in dependence on the position of the sensor assembly and the size of the area;
the microwave module being so disposed that the distance of separation between the microwave module and the radome, through which the microwave passes, may lie in the vicinity of n times the half-wave length of the microwave.

2. The vehicle detecting sensor assembly as claimed in claim 1, in which the sensor assembly is fitted to a support body disposed at a position in the vicinity of the outside of the area or above the area.

3. The vehicle detecting sensor assembly as claimed in claim 1 or 2, in which a water fall shielding body for covering the radome is provided to avoid sticking of drops of water, resulting from a fall of water, to a surface of the radome.

4. The vehicle detecting sensor assembly as claimed in claim 3, which is disposed in an outdoor parking place such that it is susceptible to an influence brought about a fall of water.

5. The vehicle detecting sensor assembly as claimed in any one of claims 1 to 4, in which the radome is made of a resinous material and has a thickness that is chosen in consideration of the wavelength of the microwave and the dielectric constant of the resinous material so that the microwave passing through the radome may not be adversely affected.

6. The vehicle detecting sensor assembly as claimed in any one of claims 1 to 5, in which the shielding member protrudes in the direction of transmission of a microwave, and is positioned rearwardly of the radome.
